# EUROPEAN PATENT APPLICATION

(11) **EP 2 353 959 A1**
(43) Date of publication of application: **10.08.2011**
(21) Application number: 10466007.1
(22) Date of filing: 15.02.2010
(51) Int. Cl.: B60W 40/08

(54) **Apparatus for monitoring and analysing a manner of driving**

(30) Priority: 28.01.2010 CZ 20100070
(71) Applicant: Centrum Dopravniho Vyzkumu, 63600 Brno (CZ)
(72) Inventor: Zaoral Ales, 77900 Olomouc (CZ)
(74) Representative: Kania, Frantisek

(57) **Abstract**

A device for monitoring and evaluating the driving style, especially that of a learner driver, comprises a computer located (1) in a car and following items connected to its inputs: a CAN bus (2), at least one camera (3) with a field of vision corresponding to the field of vision of the car driver and a receiver (4) of the global positioning system for determining the instantaneous position of the car, wherein at least one of the following sensors is also connected to the inputs of the CAN bus (2): a sensor (6) for measuring the steer angle of the steering wheel, a sensor (7) for measuring the degree of actuating the accelerator pedal, a gear shift sensor (8), a sensor (9) for measuring the degree of actuating the brake pedal and a sensor (10) for measuring the degree of actuating the clutch pedal.

The invention subsists essentially in that a meter (13) for measuring the spatial acceleration of the car and at least one of the following meters are connected to the inputs of the CAN bus (2): a meter (11) for measuring the distance driven by the car and a speed meter (12) for measuring the instantaneous velocity of the car, while a recording unit (5) for recording and time synchronisation of data entering the computer (1) from the CAN bus (2), from the receiver (4) of the global positioning system and from the camera (3) are connected to the output of the computer (1).

## Description

### Field of the art

The invention relates to a device for monitoring and evaluating the driving style, especially that of a learner driver, which comprises a computer located in a car and following items connected to its inputs: a CAN bus, at least one camera with a field of vision corresponding to the field of vision of the car driver and a receiver of the global positioning system for determining the instantaneous position of the car, wherein at least one of the following sensors is also connected to the inputs of the CAN bus: a sensor for measuring the steer angle of the steering wheel, a sensor for measuring the degree of actuating the accelerator pedal, a gear shift sensor, a sensor for measuring the degree of actuating the brake pedal and a sensor for measuring the degree of actuating the clutch pedal.

### Prior art

In the course of practical driver training, the learner driver sits usually at the driving wheel and drives the driving tuition car, the driving instructor sitting next to him and watching how the pupil reacts to the road traffic and having more or less means to influence the control of the vehicle. He has e.g. a parallel brake, clutch and gas pedal and he can reach out at the driving wheel of the car.

While driving, complex situations requiring instantaneous decisions on the part of the driver occur. The driver has to take simultaneously into account a number of circumstances such as road signs, traffic lights and obstacles on the road and/or sometimes also non-standard behaviour of other road traffic participants. The instructor cannot thoroughly explain everything to the learner driver in the very short period of time the pupil has at his disposal before he has to take a decision as to how to solve an actual problem. When evaluating the drive after its conclusion, neither the pupil nor the instructor remember exactly the respective situations which made the learner driver to make mistakes or to hesitate and so the instruction does not have the effect it might.

### Summary of the invention

The above mentioned drawbacks of the state of the art are eliminated to a great extent by a device for monitoring and evaluating the driving style, especially that of a learner driver, which comprises a computer located in a car and following items connected to its inputs: a CAN bus, at least one camera with a field of vision corresponding to the field of vision of the car driver and a receiver of the global positioning system for determining the instantaneous position of the car, wherein at least one of the following sensors is also connected to the inputs of the CAN bus: a sensor for measuring the steer angle of the steering wheel, a sensor for measuring the degree of actuating the accelerator pedal, a gear shift sensor, a sensor for measuring the degree of actuating the brake pedal and a sensor for measuring the degree of actuating the clutch pedal, wherein the substance of the invention subsists in that a meter for measuring the spatial acceleration of the car and at least one of the following meters are connected to the inputs of the CAN bus: a meter for measuring the distance driven by the car and a speed meter for measuring the instantaneous velocity of the car, while a recording unit for recording and time synchronisation of data entering the computer from the CAN bus, from the receiver of the global positioning system and from the camera are connected to the output of the computer.

According to a preferred embodiment of the invention a unit for measuring the distance from a vehicle located in the anticipated trajectory of the car and the velocity of mutual approaching of the car and the vehicle is also connected to the input of computer.

According to another preferred embodiment a scanner of the eye movements of the driver is also connected to the input of the computer or of the CAN bus.

According to yet another preferred embodiment a camera with a fisheye lens located on the roof of the vehicle is also connected to the input of the computer or of the CAN bus.

And finally, according to another preferred embodiment a module for scanning the data regarding the actual weather conditions, such as an indication of rain, humidity, temperature and light conditions, is also connected to the input of the computer or of the CAN bus.

### Brief description of the drawings

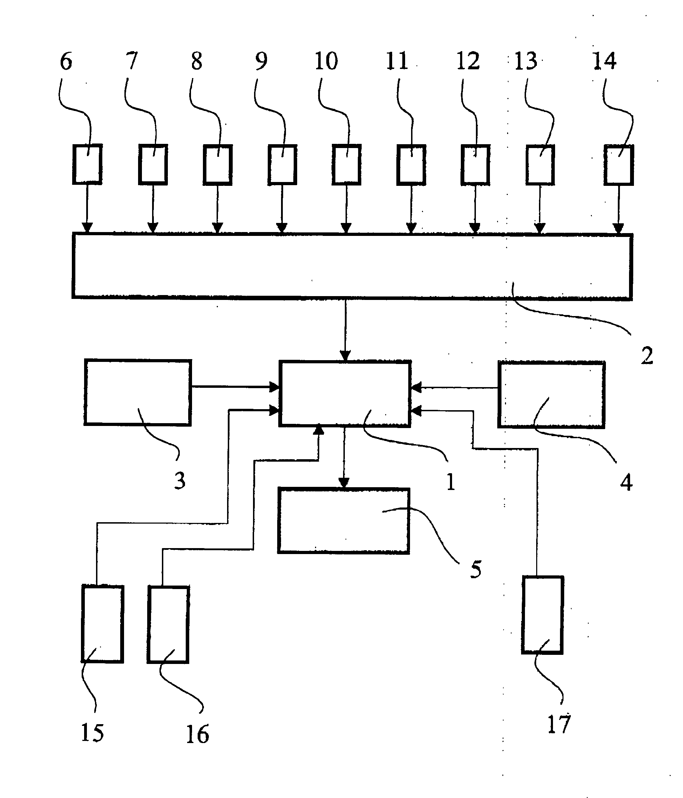

The invention will be described hereinafter in detail referring to the enclosed drawing representing an exemplary embodiment of the device for monitoring and evaluating the driving style according to this invention.

### Detailed description of the preferred embodiments

The device for monitoring and evaluating the driving style, especially that of a learner driver, represented in the enclosed drawing, comprises a computer **1** located in an automobile and a CAN bus **2** connected to the input of the computer **1,** wherein several sensors and meters are connected to the inputs of the CAN bus **2.** The following items are connected to further inputs of the computer **1:** a camera **3** having a field of vision corresponding to the field of vision of the learner driver, who is at the same time the driver of the automobile, and a receiver of the global positioning system for determining the instantaneous position of the automobile, while a recording unit 5 for recording and time synchronising of the data entering the computer from the CAN bus **2,** from the receiver 4 of the global positioning system and from the camera **3** are connected to the outputs of the computer **1.** The group of sensors connected to the CAN bus **2** comprises a sensor **6** for measuring the steer angle of the steering wheel, a sensor **7** for measuring the degree of actuating the accelerator pedal, a gear shift sensor **8**, a sensor **9** for measuring the degree of actuating the brake pedal and a sensor **10** for measuring the degree of actuating the clutch pedal. According to a preferred embodiment, the group of meters includes a distance meter **11** for measuring the distance travelled by the car, a speed meter **12** for measuring the instantaneous velocity of the car and a meter **13** for measuring the spatial acceleration of the car. There is a unit **14** connected to the computer **1** input, the unit **14** being intended for measuring the distance between the car and a vehicle situated at the anticipated trajectory of the car and for measuring the velocity of mutual approaching of the car and of the vehicle. A scanner **15** of eye movements of the driver, a camera **16** placed on the car roof and fitted with a fisheye lens and a module **17** for scanning data regarding actual weather conditions, such as an indication of rain, humidity, temperature and light conditions are also connected to an input of the computer **1.**

The device for monitoring and evaluating the driving style, especially that of a learner driver, being in operation, the sensor **6** for measuring the steer angle of the steering wheel scans the instantaneous steer angle and transmits this information via the CAN bus **2** into the computer **1.** The sensor **7** scans the instantaneous degree of actuating the accelerator pedal and transmits this information via the CAN bus **2** to the computer **1.** The gear shift sensor **8** transmits the information regarding the gear shifted at the given moment to the CAN bus **2.** The sensor **9** for measuring the degree of actuating the brake pedal scans the instantaneous rate of actuation of the brake pedal and transmits this information via the CAN bus **2** to the computer **1.** The sensor **10** for measuring the degree of actuating the clutch pedal scans the instantaneous rate of actuation of the clutch pedal and transmits this information via the CAN bus **2** to the computer **1.** The meter **11** for measuring the distance driven by the car measures the distance and transmits this information via the CAN bus **2** to the computer **1,** the meter **12** for measuring the instantaneous velocity of the car measures the instantaneous velocity and the meter **13** for measuring the spatial acceleration of the car measures the instantaneous acceleration of the car in the three space axes and transmits the information via the CAN bus **2** to the computer **1.** The camera **3** with a field of vision corresponding to the field of vision of the learner driver scans simultaneously the image the car driver may see at the given moment and transmits the video signal to the computer **1.** The receiver **4** of the global positioning system for determining the instantaneous position of the car continuously transmits the signal regarding the instantaneous position of the car to the computer **1,** which is helpful for example in later localisation of each recorded critical situation that occurred during the car driving. The scanner **15** of driver's eyes movements scans the driver's eyes movements during the drive, from which it is possible to recognize the driver's concentration on the driving, his eventual fatigue, his readiness to take notice of the traffic situation and whether the driver follows not only the situation ahead, but also next to him including the rearview mirrors of the car. The recorded movements of driver's eyes are synchronised with the other data, such as e.g. with the view of the camera **3** having its field of vision corresponding to the field of vision of the learner driver and with the driver's handling of the control elements of the car, from which data an adequacy of driver's reactions may be inferred. The camera **16** fitted with a fisheye lens and located on the roof of the car offers a perfect review of the traffic situation and the data supplied by the camera make it possible to evaluate for example the driver's foresight and his general knowledge of the traffic situation in which he finds himself. The module **17** for scanning the data regarding the actual weather conditions, such as an indication of rain, humidity, temperature and light conditions presents the information regarding the conditions under which the driver is driving and whether his driving style is adequate to the actual risky conditions, such as wet road, icy road etc. The evaluation of the speed of the car in connection with the instantaneous light conditions also indicates whether the driver is forethoughted or whether he presents a potential threat to others.

The computer **1** assigns each received piece of information to the given instant of time and the synchronised information is passed over to the recording unit **5.** The recording unit **5** records all data coming from the CAN bus **2** to the computer **1** in mutual synchronisation and assigns those to the simultaneously recorded video signal from the camera **3** and to the data regarding the vehicle position received from the receiver **4** of the global positioning system for determining the instantaneous position of the car.

According to an exemplary embodiment, the car is also equipped with the unit **14** for measuring the distance from a vehicle located in the anticipated trajectory of the car and the speed of the mutual approaching of the vehicle and the car, which can be fitted with a signal system warning against the possibility of a collision. The braking distance can be calculated easily from the distance of the vehicle at the anticipated trajectory of the car and the speed of their mutual approaching provided that the car as well as the oncoming vehicle will be braking and it is well possible to calculate the time remaining for the car driver to get out of the way of the oncoming vehicle. One can easily calculate from the known instantaneous absolute speed of the car, what turning of the steering wheel and in which time interval the driver can afford and what is the latest possible time for a manoeuvre to avoid a collision and a skidding of the car.

After the driving, the driving instructor replays the record to himself or to the pupil and he may stop the record in critical moments to get enough time to explain in detail the specific traffic situation to the pupil. The record shows what the pupil saw at a specific moment, what was his initial position, i.e. what was the situation like in the specific moment of the drive, including the traffic signal the pupil had before him, what was the pupil's solution of the situation and what were the mistakes committed by him. It is possible to find out the delay of the pupil's reaction to a new situation, whether his reaction was adequate, for example, whether he actuated the brakes too late and therefore with an unnecessary vigour, which can be read from the acceleration in the driving direction, whether the learner driver turned at a too high speed, which can be read from the lateral acceleration, whether he reacted adequately to obstacles on the road, for example to potholes, which can be read from the vertical acceleration, etc. It is also possible to find out from the record, whether the pupil shifted properly the gears, namely by comparing the data covering the speed of the vehicle and the shifted gears, or the speed of the vehicle at the moment of shifting a specific gear. It is also possible to find out from the record, whether the pupil correctly used the clutch pedal with regard to the acceleration values in the direction of the drive and whether his driving is continuous in the course of the gear shifting. On the basis of all the detected values, it is possible to form a perfect idea of the pupil's driving style and of the facts which have to be explained to the learner driver and of required future improvements of his skills.

After the drive, it is easy to discern non-essential faults from fatal errors which might entail an accident, which is particularly important in a test drive, in which the pupil should demonstrate his driving mastery and that he will not pose a potential risk to the traffic.

### Industrial applicability

Preferably the invention will be used especially as an equipment of driving school vehicles.

## Claims

1. A device for monitoring and evaluating the driving style, especially that of a learner driver, which comprises a computer located (1) in a car and following items connected to its inputs: a CAN bus (2), at least one camera (3) with a field of vision corresponding to the field of vision of the car driver and a receiver (4) of the global positioning system for determining the instantaneous position of the car, wherein at least one of the following sensors is also connected to the inputs of the CAN bus (2): a sensor (6) for measuring the steer angle of the steering wheel, a sensor (7) for measuring the degree of actuating the accelerator pedal, a gear shift sensor (8), a sensor (9) for measuring the degree of actuating the brake pedal and a sensor (10) for measuring the degree of actuating the clutch pedal, **characterised in that** a meter (13) for measuring the spatial acceleration of the car and at least one of the following meters are connected to the inputs of the CAN bus (2): a meter (11) for measuring the distance driven by the car and a speed meter (12) for measuring the instantaneous velocity of the car, while a recording unit (5) for recording and time synchronisation of data entering the computer (1) from the CAN bus (2), from the receiver (4) of the global positioning system and from the camera (3) are connected to the output of the computer (1).

2. The device for monitoring and evaluating the driving style according to claim 1, **characterised in that** a unit (14) for measuring the distance from a vehicle located in the anticipated trajectory of the car and the velocity of mutual approaching of the car and the vehicle is also connected to the input of computer (1).

3. The device for monitoring and evaluating the driving style according to claim 1, **characterised in that** a scanner (15) of the eye movements of the driver is also connected to the input of the computer (1) or of the CAN bus (2).

4. The device for monitoring and evaluating the driving style according to claim 1, **characterised in that** a camera (16) with a fisheye lens located on the roof of the vehicle is also connected to the input of the computer (1) or of the CAN bus (2).

5. Device for monitoring and evaluating the driving style according to claim 1, **characterised in that** a module (17) for scanning the data regarding the actual weather conditions, such as an indication of rain, humidity, temperature and light conditions, is also connected to the input of the computer (1) or of the CAN bus (2).
